# EUROPEAN PATENT APPLICATION

(11) **EP 4 789 769 A1**
(43) Date of publication of application: **12.08.2026**
(21) Application number: 25156041.3
(22) Date of filing: 05.02.2025
(51) Int. Cl.: B02C 19/00, B02C 4/12, B02C 4/30, B02C 13/28

(54) **GLASS BREAKER FOR BREAKING GLASS CONTAINERS**

(71) Applicant: Envipco Holding N.V., 3811LP Amersfoort (NL)
(72) Inventor: Kartanos, Christos, 3811LP Amersfoort (NL)
(74) Representative: Lüdtke, Thomas

(57) **Abstract**

The invention relates to a Glass breaker (1) for the crushing of glass containers (2), comprising a breaking unit (4) being positioned at a distance from a sloped guiding plane (3c) in a breaking area (A) and having a rotatable shaft (6) and crushing blocks (7) mounted adjacent to each other on the shaft (6); and a drive unit (5) for driving the shaft (6) of the breaking unit (4).

According to the invention, the crushing blocks (7) are excentrically mounted on the shaft (6) resulting in an excentric rotational motion of the respective crushing block (7) when driving the shaft (6) via the drive unit (5), and the excentrically mounted crushing blocks (7) are arranged on the shaft (6) in an alternating and/or periodic manner such that, at least in subsections of the breaking unit (4), the crushing sections of adjacent crushing blocks (7) are radially protruding into different directions from the shaft (6).

## Description

The present invention relates to a glass breaker for crushing or breaking glass containers, according to the preamble of claim 1.

Glass brakers are essential in the recycling industry, as they enable the efficient conversion of glass waste, in particular, glass containers into recyclable materials. These glass brakers are designed to break glass containers into smaller fragments or "glass cullet", which can then be reused in the production of new glass products or other applications. The operation of these glass breakers typically relies on mechanical crushing techniques, where glass is shattered using force, impact, or cutting to break it into smaller pieces. The key mechanisms employed include mills applying appropriate forces to shatter the glass.

Normally, such glass breakers comprise a glass receiving section for receiving pre-sorted glass material, in particular, glass containers. The pre-sorted glass material is then guided into the breaking unit, wherein mills having rotating plates or other rotating means are commonly used in such systems, where glass is broken by impact and/or exerting mechanical pressure resulting in fine fragmentation. The fine fragmented material is provided via a glass cullet output section of the glass breaker. Examples of such glass breakers are described in WO 2004/108293 A1, US 2012318899 A1, DE 27 36 853 A1, EP 0 380 131 A2, WO 2012/143846 A1, JPH 11319597 A, EP 2 289 626 A2, CN 115228587 A, JP S4874168 U, CN 217491057 U.

In such glass breakers, the fine fragmentation of the glass material typically also results in the production of very fine glass particles. While this may seem efficient for breaking down the glass material, it presents a significant drawback. Fine glass particles can pose health and safety risks, as they are more likely to become airborne. Additionally, smaller glass fragments are harder to recycle effectively, as they may not be suitable for reuse in manufacturing processes, leading to increased waste and decreased overall efficiency in recycling systems.

To address these problems, according to the invention, a glass breaker is provided that allows fragmentation of glass, in particular, glass containers, in a secure and reliable way such that the fragmented glass can be reused efficiently.

This objective is solved by a glass breaker of the invention as described in independent claim 1. Advantageous embodiments of the invention are described in the subclaims.

Thus, according to the invention, a glass breaker for the crushing of glass containers, in particular, glass bottles, is provided, comprising:
- a housing having
   --- a receiving section for receiving the glass containers,
   --- a glass cullet output section for providing glass cullet, and
   --- a sloped guiding plane between the receiving section and the glass cullet output section for guiding received glass containers into a breaking area inside the housing by the force of gravity;
- a breaking unit being positioned at a distance from the sloped guiding plane in the breaking area, such that glass cullet produced by the braking unit can move towards the glass cullet output section, wherein the braking unit has a rotatable shaft and crushing blocks mounted adjacent to each other on the shaft; and
- a drive unit for driving the shaft of the breaking unit, e.g., containing an electric motor and a chain drive interconnected with the shaft for setting the shaft in rotation.

Thereby, one of the inventive ideas is that at least some, preferably all, of the crushing blocks are excentrically mounted on the shaft of the breaking unit via a mounting section of the respective crushing block such that a crushing section of the respective crushing block protrudes radially from the shaft to a greater extent than the mounting section of the respective crushing block resulting in an excentric rotational motion of the respective crushing block when driving the shaft via the drive unit. In other words, the respective crushing block is attached off-center to the rotating shaft via the mounting section causing the crushing section of the crushing block to follow a circular or elliptical path around the shaft's axis resulting in a hammer-like (excentric) motion.

Thereby, each crushing block can be (virtually) divided into the crushing section and the mounting section, wherein, for example, a mounting hole or an opening might be located in the mounting section for mounting the respective crushing block onto the shaft, e.g., by a form-fitting connection and/or a friction-locked connection. Further, the crushing section is lying radially opposite to the mounting section. Preferably, the crushing sections or the crushing blocks are each formed identically.

In a preferred embodiment, this can be achieved if the respective crushing block is disc-shaped, e.g., having a polygonal contour, in particular, a hexagonal contour, or a rounded contour, with such disc-shaped crushing block being mounted to the shaft off-center. Thereby, the contour generally refers to the outline or boundary of the disc-shaped crushing block, wherein a polygonal contour refers to a shape made up of a series of straight line segments connected together to form a closed boundary. The width of such a disc-shaped crushing block might be between 10mm and 20mm, and the diameter between 70mm and 100mm.

A further inventive idea is that at least some, preferably all, of these excentrically mounted crushing blocks are arranged on the shaft in an alternating (several times) and/or periodic manner such that, at least in subsections of the breaking unit, the crushing sections of adjacent crushing blocks are radially protruding into different directions from the shaft, creating a wave-like (multiple wave periods) rotational motion throughout the entire shaft. This includes that crushing sections of directly neighboring crushing blocks or of at least every second or third or n.th neighboring crushing blocks are radially protruding into different directions from the shaft, if this is the case in an alternating (several times) and/or periodic manner. So, it is also an option that the crushing sections of pairs of two or three or more directly neighboring crushing blocks protrude into the same direction and the crushing sections of the crushing blocks of such neighboring pairs are radially protruding into a different direction in relation, wherein this pairwise arrangement is periodic and/or alternating several times throughout the entire shaft.

Further, "radially protruding into different directions" in this context is to be understood that the rotational position of the respective crushing sections on the shaft is not identical or they are not positioned congruently on the shaft, in particular, if they are formed identical.

The inventors have found out, that this special construction of the glass breaker, in particular, of the breaking unit advantageously allows the glass containers to be broken into larger cullet, allowing to minimize the formation of dust, even at low rotations per minute, generally providing a safe operation of the glass breaker. This is accomplished by the eccentric and alternating and/or periodic arrangement of crushing blocks, also allowing a high container breakage percentage, i.e., of over 90%, as well as a container blockage-proof operation of the glass breaker with a variety of glass container shapes and sizes.

According to another aspect of the invention, pins, in particular made of a hardened material, e.g., tungsten carbide, are perpendicularly protruding from an outer radial surface (contour or outline or boundary) of the crushing blocks in an evenly distributed manner, e.g., next to edges formed in the crushing blocks, in particular when polygonal/hexagonal shaped. On impact, such pins can further strengthen the crushing effect, and, in addition, they act as hooks dragging the glass containers into the breaking area during its gravitational movement along the sloped guiding plane, providing a safer operation.

According to another aspect of the invention, the mounting hole in the mounting section has a central axis that is not aligned with or offset from a central axis of the respective disc-shaped crushing block. This is an easy construction option for allowing an excentric rotational motion of the respective crushing block on rotation of the shaft.

According to another aspect of the invention, the crushing sections of directly adjacent crushing blocks on the shaft are radially protruding into different directions from the shaft, in particular, in opposite radial directions from the shaft, in an alternating manner, such that the excentric rotational motion of directly adjacent disc-shaped crushing blocks is angularly shifted, in particular, with an angular shift of 180° or less to each other. This allows an easy construction and a very safe operation of the glass breaker.

According to an alternative aspect of the invention, the crushing sections of every second or third neighboring crushing blocks on the shaft are radially protruding into different directions from the shaft, in particular, in opposite radial directions from the shaft, in a periodic manner, such that the excentric rotational motion of every second or third neighboring disc-shaped crushing blocks is angularly shifted, in particular, with an angular shift of 180° or less to each other. This provides an alternative construction of the periodically arranged crushing blocks.

According to another aspect of the invention, directly adjacent crushing blocks are spaced apart from each other on the shaft, e.g., via spacers, providing a gap between directly adjacent crushing blocks. This improves the overall operation, in particular, a container blockage-proof operation, of the glass braker. According to another embodiment, directly adjacent crushing blocks are not spaced apart, so no spacers or the like are provided.

According to another aspect of the invention, protrusions, e.g., finger-like protrusions running in parallel to the shaft, are located on the guiding plane in the breaking area for assisting the glass containers to approach the crushing blocks during their gravitational motion. Such protrusions guide the falling glass containers into the direction of the breaking unit, preventing a blockage of glass containers and improving the impact of the crushing blocks optimizing the crushing effect.

According to another aspect of the invention, a rollback stopper is located on the guiding plane for preventing glass containers from moving back towards the receiving section. This further enhances the safe operation of the glass breaker, in particular, if the rollback stopper is formed as a plate being angled away from the sloped guiding plane.

### Brief description of the drawings

- Fig. 1: shows a cross-sectional view of a glass breaker;
- Fig. 2: shows a detailed view of crushing blocks 7 of a breaking unit 4 of the glass breaker according to Fig. 1;
- Fig. 3a-d: shows detailed views of the breaking unit in different working conditions.

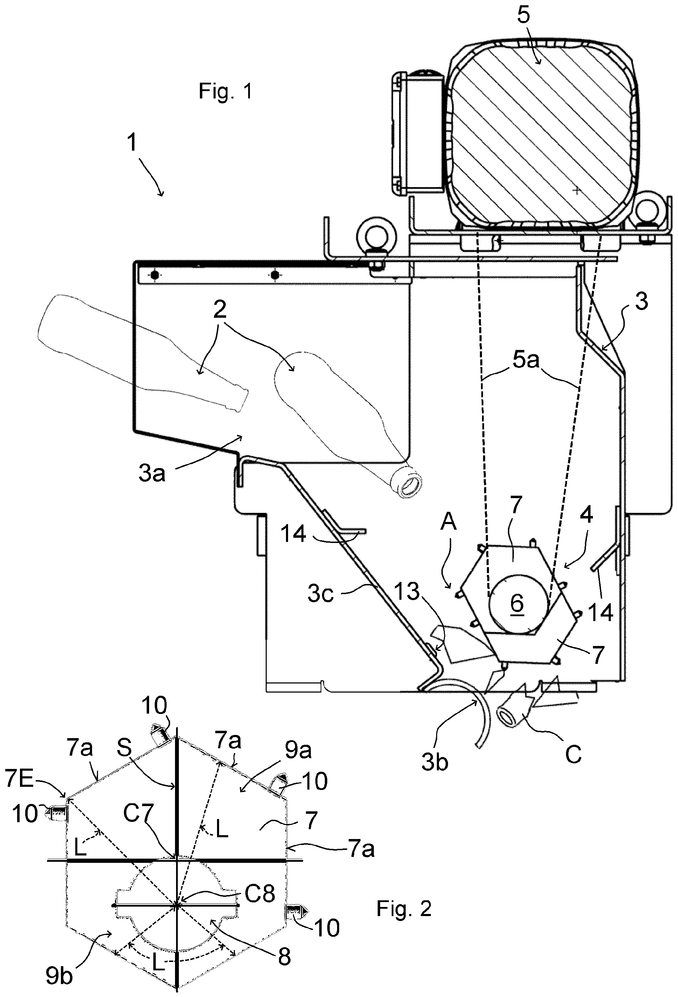

Figure 1 shows a cross-sectional view of a glass breaker 1 for the crushing or breaking of glass containers 2, e.g., glass bottles, comprising - a housing 3 having a receiving section 3a for receiving (pre-sorted) glass material, in particular, the glass containers 2, a glass cullet output section 3b for providing glass cullet C and a sloped guiding plane 3c (container ramp made of metal) between the receiving section 3a and the glass cullet output section 3b, for guiding the glass containers 2 into a breaking area A by the force of gravity,
- a breaking unit 4 being positioned spaced apart from the sloped guiding plane 3c in the breaking area A, and
- a drive unit 5, e.g. a motor, for driving the breaking unit 4, as described hereinafter.

The breaking unit 4 is consisting of a shaft 6 that is driven by the drive unit 5, e.g. via a traction means 5a, i.e., a drive chain or a drive belt, and disc-shaped crushing blocks 7, each being non-rotatably mounted on the shaft 6. Preferably, the disc-shaped crushing blocks 7 are each made of alloy steel providing a high hardness. According to a preferred embodiment, each of the disc-shaped blocks 7 have a hexagonal shape symmetrically formed around a central axis C7 of the respective crushing block 7, as shown in more detail in Fig. 2. Instead of a hexagonal shape, any other polygonal shape can be provided, wherein even round shapes are possible.

Each disc-shaped crushing block 7 has a mounting hole 8 that is not centered on the disc-shaped crushing block 7, meaning that the central axis C8 of the mounting hole 8 is not aligned with or offset from the central axis C7 of the respective disc-shaped crushing block 7. In the exemplary embodiment shown in Fig. 2 the central axis C8 of the mounting hole 8 is shifted along one of the six axis of symmetry S, e.g., one of the axis of symmetry S that connects opposing edges 7E. However, also other shifting directions are possible.

Consequently, when mounting the disc-shaped crushing blocks 7 on the shaft 6 a rotation of the shaft 6 results in an excentric rotational motion of the disc-shaped crushing blocks 7, i.e., they are not rotating symmetrically around their central axis C7 but irregular. Thereby, each crushing block 7 can be (virtually) divided in a crushing section 9a and a mounting section 9b, wherein the mounting hole 8 is located in the mounting section 9b and the crushing section 9a lies (radially) opposite to the mounting section 9b on the respective disc-shaped crushing block 7. Due to the non-coaxial positioning of the mounting hole 8 on the crushing block 7 the crushing section 9a of the respective disc-shaped crushing block 7 protrudes radially from the shaft 6 to a greater extent than the mounting section 9b of the respective disc-shaped crushing block 7. In other words, a distance L between the central axis C8 of the mounting hole 8 (or the rotational axis of the shaft 6) and the outer radial surface 7a of the crushing block 7 is greater in the crushing section 9a than in the mounting section 9b. This leads to a hammer-like movement of the crushing blocks 7, wherein the crushing section 9a is acting as the hammer.

Thus, as soon as the outer radial surface 7a of the crushing block 7 in the radially more protruding crushing area 9a hits a glass container 2 being positioned in the breaking area A between the respective crushing block 7 and the sloped guiding plane 3c it is crushed or cracked due to this hammer-like motion and the resulting glass cullet C can slide towards the glass cullet output section 3b.

Further, pins 10 are perpendicularly protruding from the outer radial surface 7a next to the edges 7E of the crushing blocks 7 in an evenly distributed manner, at least in the crushing section 9a. These pins 10 are made of a hardened material, e.g., tungsten carbide, for example, providing a high hardness. On impact, these pins 10 can further strengthen the crushing effect, and, in addition, they act as hooks dragging the glass containers 2 into the breaking area A during its gravitational movement along the sloped guiding plane 3c.

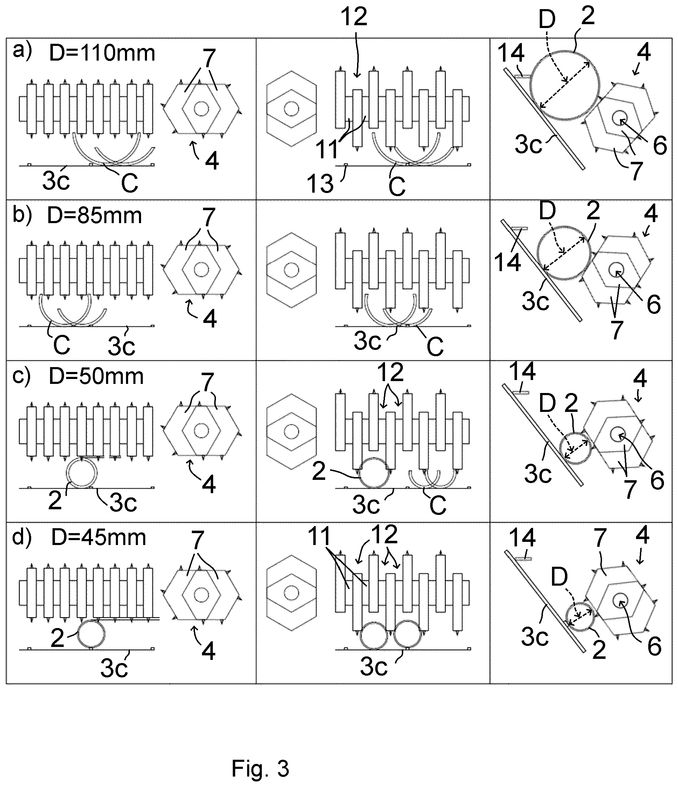

As can be seen from Figs. 3a)-d) the disc-shaped crushing blocks 7 are spaced apart from each other on the shaft 6, e.g., via a spacer 11 or fitting elements or equivalent means, providing a gap 12 between directly adjacent disc-shaped crushing blocks 7, wherein the size of the gap 12 is dependent on the use, e.g., approx.. 2-5mm. Further, at least according to the shown embodiment, directly adjacent disc-shaped crushing blocks 7 are assembled in an inverse fashion on the shaft 6, meaning that the crushing sections 9a of directly adjacent disc-shaped crushing blocks 7 are radially protruding in different directions from the shaft 6, in particular, in opposite radial directions from the shaft 6.

Consequently, the excentric rotational motion of directly adjacent disc-shaped crushing blocks 7 is angularly shifted, in particular, with an angular shift of 180° to each other, creating a wave-like rotational motion throughout the entire shaft 6. This also prevents glass containers 2 from being blocked. Further, in this embodiment, every second disc-shaped crushing blocks 7 on the shaft 6 are identical in their arrangement on the shaft 6 and its excentric rotational motion. This is also referred to as an alternating sequence of the differently protruding crushing sections 9a or crushing blocks 7, at least in subsections of the breaking unit 4.

In contrast to this alternating arrangement of the crushing sections 9a of the disc-shaped crushing blocks 7 on the shaft 6 also other periodic sequences are possible, i.e., not every second disc-shaped crushing blocks 7 on the shaft 6 are identical and/or crushing sections 9a of directly adjacent disc-shaped crushing blocks 7 are not radially protruding in different directions. For example, there also might be an angular shift of less than 180° between directly adjacent crushing blocks 7 and/or every third or fourth or fifth ... disc-shaped crushing blocks 7 on the shaft 6 are identical. Otherwise, the crushing sections 9a of pairs (of two or three or ....) of directly adjacent disc-shaped crushing blocks 7 might be radially protruding into the same direction on the shaft 6, at least in subsections of the breaking unit 4, with crushing sections 9a of such neighboring pairs (of two or three or....) being aligned in different radial directions.

In the different rotational positions of the excentric disc-shaped crushing blocks 7, according to their respective alternating or periodical arrangement to each other, the crushing or breaking of glass containers 2 of different diameters D and/or of different shapes is possible, as shown in Figs. 3a - 3d. Just by way of example, bigger glass containers 2 having diameters D of 85mm or above, a breaking ideally occurs in every rotational position of the disc-shaped crushing blocks 7, as the crushing sections 9a of every disc-shaped crushing block 7 impact on the (not yet broken) class containers 2 independent of their rotational position (see Fig. 3a, 3b). However, glass containers 2 having smaller diameters D of 50mm or less (by way of example) breaking only occurs if at least the crushing sections 9a of every second disc-shaped crushing blocks 7 point perpendicular to or at least in the direction of the sloped guiding plane 3c, as seen in Fig. 3c and 3d. Nevertheless, a cracking or crushing of a variety of shapes and diameters D of glass containers 2 is possible.

Further, finger-like protrusions 13 on the guiding plane 3c that are running in parallel to the shaft 6 can assist in approaching at least smaller glass containers 2 to the crushing blocks 7 during their gravitational motion for optimizing the crushing of smaller glass containers 2. An additional rollback stopper 14 (flap), e.g., formed as a plate being angled away from the sloped guiding plane 3c, is located in the receiving section 3a or on the sloped guiding plane 3c for preventing large glass containers 2 from moving back towards the receiving section 3a. Further, the dimensions of the crushing blocks 7 and/or the position of the shaft 6 in respect to the guiding plane 3c can be adjusted to the diameter D and/or shape of the glass containers 2.

Summarizing, a glass breaker 1 as described allows crushing or cracking a variety of glass containers 2, wherein the hammer-like impact as described is already leading to a cracking of the glass containers 2 when the crushing blocks 7 are operated at low rotational speeds. This leads to a safer operation and prevents the glass containers 2 from breaking into too small pieces and/or prevents the creation of dust, in addition, making the operation more efficient as a large portion of the glass cullet C can be reused.

### List of reference signs

- 1: glass breaker
- 2: glass container
- 3: housing
- 3a: receiving section
- 3b: glass cullet output section
- 3c: guiding plane
- 4: breaking unit
- 5: drive unit
- 5a: traction means
- 6: shaft
- 7: crushing block
- 7a: outer radial surface of the crushing block 7
- 7E: edges of the crushing block 7
- 8: mounting hole
- 9a: crushing section
- 9b: mounting section
- 10: pin
- 11: spacer
- 12: gap
- 13: protrusion
- 14: rollback stopper

- A: breaking area
- C: glass cullet
- C7: central axis of the crushing block
- C8: central axis of the mounting hole
- D: diameter
- L: length between central axis C8 and outer radial surface 7a
- S: axis of symmetry

## Claims

1. Glass breaker (1) for the crushing of glass containers (2), comprising:
- a housing (3) having
--- a receiving section (3a) for receiving the glass containers (2),
--- a glass cullet output section (3b) for providing glass cullet (C), and
--- a sloped guiding plane (3c) between the receiving section (3a) and the glass cullet output section (3b) for guiding received glass containers (2) into a breaking area (A) inside the housing (3) by the force of gravity;
- a breaking unit (4) being positioned at a distance from the sloped guiding plane (3c) in the breaking area (A), such that glass cullet (C) produced by the braking unit (4) can move towards the glass cullet output section (3b), wherein the braking unit (4) has a rotatable shaft (6) and crushing blocks (7) mounted adjacent to each other on the shaft (6); and
- a drive unit (5) for driving the shaft (6) of the breaking unit (4),
**characterized in that**
the crushing blocks (7) are excentrically mounted on the shaft (6) of the breaking unit (4) via a mounting section (9b) such that a crushing section (9a) of the respective crushing block (7) protrudes radially from the shaft (6) to a greater extent than the mounting section (9b) of the respective crushing block (7) resulting in an excentric rotational motion of the respective crushing block (7) when driving the shaft (6) via the drive unit (5), and that
the excentrically mounted crushing blocks (7) are arranged on the shaft (6) in an alternating and/or periodic manner such that, at least in subsections of the breaking unit (4), the crushing sections (9a) of adjacent crushing blocks (7) are radially protruding into different directions from the shaft (6).

2. Glass breaker (1) according to claim 1, wherein the crushing blocks (7) are disc-shaped having a polygonal contour, in particular, a hexagonal contour, or a rounded contour.

3. Glass breaker (1) according to claim 1 or 2, wherein pins (10) are perpendicularly protruding from an outer radial surface (7a) of the crushing blocks (7), e.g., next to edges (7E) formed in the crushing blocks (7).

4. Glass breaker (1) according to claim 3, wherein the pins (10) are made of a hardened material, e.g., tungsten carbide.

5. Glass breaker (1) according to any one of the preceding claims, wherein a mounting hole (8) is formed in the mounting section (9b) of the respective crushing block (7), wherein the crushing block (7) is fitted to the shaft (6) via the mounting hole (8), in particular, by a form-fitting connection and/or a friction-locked connection, and
wherein the mounting hole (8) has a central axis (C8) that is not aligned with or offset from a central axis (C7) of the respective disc-shaped crushing block (7) for allowing an excentric rotational motion of the respective crushing block (7) on rotation of the shaft (6).

6. Glass breaker (1) according to claim 5, wherein the crushing section (9a) lies radially opposite to the mounting section (9b) on the respective disc-shaped crushing block (7).

7. Glass breaker (1) according to claim 5 or 6, wherein a distance (L) between the central axis (C8) of the mounting hole (8) and an outer radial surface (7a) of the crushing block (7) in the crushing section (9a) is greater than a distance (L) between the central axis (C8) of the mounting hole (8) and the outer radial surface (7a) of the crushing block (7) in the mounting section (9b).

8. Glass breaker (1) according to any one of the preceding claims, wherein the crushing sections (9a) of directly adjacent crushing blocks (7) on the shaft (6) are radially protruding into different directions from the shaft (6), in particular, in opposite radial directions from the shaft (6), in an alternating manner, such that the excentric rotational motion of directly adjacent disc-shaped crushing blocks (7) is angularly shifted, in particular, with an angular shift of 180° or less to each other.

9. Glass breaker (1) according to any one of the preceding claims, wherein the crushing sections (9a) of every second or third neighboring crushing blocks (7) on the shaft (6) are radially protruding into different directions from the shaft (6), in particular, in opposite radial directions from the shaft (6), in a periodic manner, such that the excentric rotational motion of every second or third neighboring disc-shaped crushing blocks (7) is angularly shifted, in particular, with an angular shift of 180° or less to each other.

10. Glass breaker (1) according to any one of the preceding claims, wherein directly adjacent crushing blocks (7) mounted on the shaft (6) are spaced apart from each other, e.g., via spacers (11), providing a gap (12) between directly adjacent crushing blocks (7).

11. Glass breaker (1) according to any one of the preceding claims, wherein protrusions (13), e.g., finger-like protrusions (13) running in parallel to the shaft (6), are located on the guiding plane (3c) in the breaking area (A) for assisting the glass containers (2) to approach the crushing blocks (7) during their gravitational motion.

12. Glass breaker (1) according to any one of the preceding claims, wherein a rollback stopper (14) is located on the guiding plane (3c) and/or in the receiving section (3a) for preventing glass containers (2) from moving back towards the receiving section (3a).

13. Glass breaker (1) according to claim 12, wherein the rollback stopper (14) is formed as a plate being angled away from the sloped guiding plane (3c).

## Amended claims

### Amended claims in accordance with Rule 137(2) EPC.

1. Glass breaker (1) for the crushing of glass containers (2), comprising:
- a housing (3) having
--- a receiving section (3a) for receiving the glass containers (2),
--- a glass cullet output section (3b) for providing glass cullet (C), and
--- a sloped guiding plane (3c) between the receiving section (3a) and the glass cullet output section (3b) for guiding received glass containers (2) into a breaking area (A) inside the housing (3) by the force of gravity;
- a breaking unit (4) being positioned at a distance from the sloped guiding plane (3c) in the breaking area (A), such that glass cullet (C) produced by the braking unit (4) can move towards the glass cullet output section (3b), wherein the braking unit (4) has a rotatable shaft (6) and crushing blocks (7) mounted adjacent to each other on the shaft (6); and
- a drive unit (5) for driving the shaft (6) of the breaking unit (4),
wherein the crushing blocks (7) are excentrically mounted on the shaft (6) of the breaking unit (4) via a mounting section (9b) such that a crushing section (9a) of the respective crushing block (7) protrudes radially from the shaft (6) to a greater extent than the mounting section (9b) of the respective crushing block (7) resulting in an excentric rotational motion of the respective crushing block (7) when driving the shaft (6) via the drive unit (5), and wherein
the excentrically mounted crushing blocks (7) are arranged on the shaft (6) in an alternating and/or periodic manner such that, at least in subsections of the breaking unit (4), the crushing sections (9a) of adjacent crushing blocks (7) are radially protruding into different directions from the shaft (6),
**characterized in that**
the crushing blocks (7) are disc-shaped having a polygonal contour.

2. Glass breaker (1) according to claim 1, wherein the crushing blocks (7) are disc-shaped having a hexagonal contour.

3. Glass breaker (1) according to claim 1 or 2, wherein pins (10) are perpendicularly protruding from an outer radial surface (7a) of the crushing blocks (7).

4. Glass breaker (1) according to claim 3, wherein the pins (10) are perpendicularly protruding from the outer radial surface (7a) of the crushing blocks (7) next to edges (7E) formed in the crushing blocks (7).

5. Glass breaker (1) according to claim 3 or 4, wherein the pins (10) are made of a hardened material.

6. Glass breaker (1) according to any one of the preceding claims, wherein a mounting hole (8) is formed in the mounting section (9b) of the respective crushing block (7), wherein the crushing block (7) is fitted to the shaft (6) via the mounting hole (8), and
wherein the mounting hole (8) has a central axis (C8) that is not aligned with or offset from a central axis (C7) of the respective disc-shaped crushing block (7) for allowing an excentric rotational motion of the respective crushing block (7) on rotation of the shaft (6).

7. Glass breaker (1) according to claim 6, wherein the crushing block (7) is fitted to the shaft (6) via the mounting hole (8) by a form-fitting connection and/or a friction-locked connection.

8. Glass breaker (1) according to claim 6 or 7, wherein the crushing section (9a) lies radially opposite to the mounting section (9b) on the respective disc-shaped crushing block (7).

9. Glass breaker (1) according to any one of claims 6 to 8, wherein a distance (L) between the central axis (C8) of the mounting hole (8) and an outer radial surface (7a) of the crushing block (7) in the crushing section (9a) is greater than a distance (L) between the central axis (C8) of the mounting hole (8) and the outer radial surface (7a) of the crushing block (7) in the mounting section (9b).

10. Glass breaker (1) according to any one of the preceding claims, wherein the crushing sections (9a) of directly adjacent crushing blocks (7) on the shaft (6) are radially protruding into different directions from the shaft (6) in an alternating manner, such that the excentric rotational motion of directly adjacent disc-shaped crushing blocks (7) is angularly shifted.

11. Glass breaker (1) according to any one of the preceding claims, wherein the crushing sections (9a) of every second or third neighboring crushing blocks (7) on the shaft (6) are radially protruding into different directions from the shaft (6) in a periodic manner, such that the excentric rotational motion of every second or third neighboring disc-shaped crushing blocks (7) is angularly shifted.

12. Glass breaker (1) according to any one of the preceding claims, wherein directly adjacent crushing blocks (7) mounted on the shaft (6) are spaced apart from each other providing a gap (12) between directly adjacent crushing blocks (7).

13. Glass breaker (1) according to any one of the preceding claims, wherein protrusions (13) are located on the guiding plane (3c) in the breaking area (A) for assisting the glass containers (2) to approach the crushing blocks (7) during their gravitational motion.

14. Glass breaker (1) according to any one of the preceding claims, wherein a rollback stopper (14) is located on the guiding plane (3c) and/or in the receiving section (3a) for preventing glass containers (2) from moving back towards the receiving section (3a).

15. Glass breaker (1) according to claim 14, wherein the rollback stopper (14) is formed as a plate being angled away from the sloped guiding plane (3c).
